# FASCICULE DE BREVET EUROPEEN

(11) **EP 2 188 176 B1**
(45) Date de publication et mention de la délivrance du brevet: **23.03.2011**
(21) Numéro de dépôt: 08857634.3
(22) Date de dépôt: 11.09.2008
(51) Int. Cl.: B64C 39/02

(54) **DRONE MODULAIRE A SOUS-ENSEMBLES DETACHABLES**
MODULARE DROHNE MIT ABNEHMBAREN KOMPONENTEN
MODULAR DRONE WITH DETACHABLE SUB-ASSEMBLIES

(30) Priorité: 12.09.2007 FR 0706401
(43) Date de publication de la demande: 26.05.2010
(73) Titulaire: Altair, 75016 Paris (FR)
(72) Inventeur: LEHMANN, Benjamin, F-75016 Paris (FR)
(74) Mandataire: Bentz, Jean-Paul
(86) Numéro de dépôt international: PCT/FR2008/001273
(87) Numéro de publication internationale: WO 2009/071755

(56) Documents cités:
- WO-A-99/37372
- US-A- 4 709 881
- US-A- 5 035 382
- US-A- 5 365 291
- US-A1- 2003 060 944
- US-A1- 2005 014 445
- US-A1- 2005 029 400
- US-A1- 2005 227 582
- US-A1- 2006 091 258

## Description

### DOMAINE TECHNIQUE

La présente invention concerne le domaine des drones ou « aéronefs sans pilote».

Il concerne plus particulièrement les drones à voilure fixe, mais non exclusivement : l'invention peut également être mise en oeuvre avec des drones à voilure tournante ou autres moyens de sustentation.

### ÉTAT DE LA TECHNIQUE ANTERIEURE

On connaît dans l'état de la technique un grand nombre de drones qui posent tous le problème de la mauvaise protection de la charge embarquée en cas de chute ou de mauvais contrôle de l'engin.

On a proposé dans l'état de la technique une solution décrite dans le document de brevet US 7,237,750 consistant à disposer d'un drone modulaire, dont les différents modules sont facilement assemblables et désassemblables à la main, et connectés entre eux par des systèmes de clips. Chacun desdits modules est de plus constitué de sorte d'absorber ou dissiper l'impact des chocs lors d'un atterrissage mal contrôlé.

On a également proposé dans l'état de la technique une solution décrite dans le document de brevet US 2005/014445. Dans ce document, un engin volant télécommandé, notamment pour la prise de vues aériennes, comprend une nacelle fixée de façon détachable à une partie de sustentation. La nacelle inclue une partie basse proéminente vers l'avant. La partie de sustentation comporte une voilure et une poutre centrale, la voilure étant fixée à la poutre centrale. Les liaisons entre la partie de sustentation et la partie basse sont constituées de deux boulons jouant le rôle de fusibles en cas de crash. Ces liaisons sont donc susceptibles de se rompre lors d'un crash, entraînant ainsi le détachement de la partie de sustentation avec la partie basse.

L'inconvénient de ces deux solutions est que la technique d'assemblage par liaison mécanique offre un maintien trop rigide des pièces assemblées. Cette rigidité est particulièrement néfaste pour le sous-ensemble contenant la charge embarquée de l'engin volant, celui-ci n'étant pas suffisamment isolée vis-à-vis de l'impact des chocs lors d'un décollage avorté, d'un atterrissage difficile ou de tout autre choc mécanique. En effet, une partie des chocs est transmise à la charge embarquée par les connexions mécaniques rigides. De plus, la rigidité de la liaison empêche la charge embarquée de se désolidariser des autres sous-ensembles de l'engin volant au-delà d'un seuil d'arrachage. Ainsi une partie des chocs est susceptible de faire subir à ladite charge embarquée une cassure irréversible.

D'une manière plus générale, dans le domaine aéronautique, les techniques d'assemblage utilisent des liaisons de type mécanique, avec utilisation de vis, de rivets, de soudures ou de clips.

Toutes ces connexions de type mécanique transmettent une partie des chocs, sans en dissiper de manière significative. Elles ne sont de plus pas susceptibles de se détacher entre elles sous l'effet d'un choc au-delà d'un seuil d'arrachage. Elles ne résolvent donc pas le problème lié à la protection du système de connexion lui-même, ainsi que de la charge embarquée, qui, au-delà du travail de maintenance supplémentaire que sa dégradation implique, contient dans une variante particulière un système d'imagerie fort coûteux.

### EXPOSE DE L'INVENTION

Le but de la présente invention est de remédier à cet inconvénient, en proposant un drone modulaire constitué de sous-ensembles assemblées de manière à se séparer en cas de choc sans que cela n'engendre une quelconque rupture mécanique nécessitant une intervention de maintenance. La présente invention permet également l'absorption d'une partie du choc afin de réduire l'impact global sur la structure de l'ensemble de l'appareil, et un assemblage et un désassemblage rapides des éléments de l'engin en cas de nécessité opérationnelle. Enfin, la présente invention réalise une liaison entre deux sous-ensembles avec une force de maintien suffisante pour permettre le bon fonctionnement de l'appareil en condition d'utilisation.

La présente invention propose dans son acception la plus générale un drone modulaire constitué par une structure volante et des moyens d'acquisition d'images, caractérisé en ce que les moyens d'acquisition d'images ainsi que la motorisation sont supportés par une platine rigide reliée à la structure volante par des liaisons détachables lorsque les efforts entre la platine et la structure volante dépassent une valeur seuil d'arrachage, ces liaisons étant constituées par l'un parmi des liaisons électromagnétiques et des matériaux et bandes auto-agrippants.

De préférence, les liaisons détachables sont constituées par liaisons électromagnétiques.

Dans le cas de liaisons électromagnétiques, les liaisons détachables sont de préférence constituées par des aimants permanents.

Dans ce dernier cas, les liaisons détachables sont préférentiellement constituées par une pluralité d'aimants permanents à terres rares disposés dans une zone périphérique de la platine, la structure volante comportant des aimants permanents disposés pour coopérer magnétiquement avec les aimants permanents de la platine lorsque les deux parties sont assemblées.

Dans le cas de liaisons électromagnétiques, selon un autre mode de réalisation, les liaisons détachables sont constituées par des électro-aimants.

Dans ce dernier cas, les liaisons détachables sont préférentiellement constituées par une pluralité d'électro-aimants disposés dans une zone périphérique de la platine, la structure volante comportant des électro-aimants disposés pour coopérer magnétiquement avec les électro-aimants de la platine lorsque les deux parties sont assemblées.

Dans un autre mode de réalisation, les liaisons détachables sont constituées par des matériaux auto-agrippants.

Dans un autre mode de réalisation, les liaisons détachables sont constituées par des bandes auto-agrippantes.

Avantageusement, une partie au moins des liaisons détachables sont encastrées dans la structure volante ou la platine.

Dans un mode de réalisation particulier, la platine présente une cavité d'une forme complémentaire à une protubérance pour le logement de la charge embarquée.

Dans un mode de réalisation particulier, la platine présente une pluralité de contacts électriques aptes à coopérer avec des contacts complémentaires prévus sur la structure volante, pour la transmission des signaux électriques de commande des servo-moteurs solidaires de la structure volante.

Dans un mode de réalisation particulier, la structure volante est munie de gouvernes articulées en liaison avec des charnières intégrées à ladite structure volante, ainsi que des ailettes verticales marginales à ses extrémités.

Dans une variante avantageuse, la platine est constituée en carbone et la structure volante est constituée en polypropylène expansé.

De manière avantageuse, le drone modulaire fait partie d'un système aéroporté d'acquisition d'images, ce drone modulaire étant apte à communiquer avec un système de pilotage au sol.

Avantageusement, ce système aéroporté d'acquisition d'images comporte des moyens d'asservissement des déplacements du drone en fonction de l'image cible à acquérir, cette image cible étant déterminée par un utilisateur de ce système de pilotage au sol.

### BREVE DESCRIPTION DES DESSINS

L'invention sera mieux comprise à la lecture de la description détaillée d'un exemple non limitatif de réalisation, où :
- la figure 1 représente une vue en trois dimensions d'un drone modulaire selon la présente invention,
- la figure 2 représente une vue de la partie inférieure de ce drone modulaire,
- la figure 3 représente une vue de profil de la structure volante de ce drone modulaire,
- la figure 4 représente une vue de la partie inférieure de la platine de ce drone modulaire,
- la figure 5 représente une vue de profil de la platine,
- la figure 6 représente une vue en trois dimensions de la structure volante et de la platine lorsqu'elles sont aptes à être assemblées,
- la figure 7 représente une vue en trois dimensions de la structure volante et de la platine lorsqu'elles sont assemblées,
- la figure 8 représente une vue de la partie inférieure de la structure volante,
- la figure 9 représente une vue de la partie inférieure de la structure volante assemblée à la platine (en pointillés), et
- la figure 10 représente un schéma du système aéroporté d'acquisition d'images, comprenant ce drone modulaire et un système de pilotage au sol.

### EXPOSE DETAILLE DE MODES DE REALISATION PARTICULIERS

Un drone modulaire conforme à l'invention est un drone modulaire de type aile volante de moins d'un mètre d'envergure et de 650 grammes en ordre de vol.

Ce drone est utilisé comme système aéroporté d'acquisition d'images fixes au animées (vidéo). La charge embarquée de ce drone comporte en effet un système d'acquisition d'images apte à communiquer avec un système de réception et d'observation des images en temps réel au sol. Ce système d'acquisition d'images comprend un système d'imagerie. Dans une variante avantageuse, le système d'imagerie est une caméra vidéo en haute définition. Dans un autre mode de réalisation, la caméra vidéo peut être remplacée par un appareil-photo d'une résolution supérieure à dix millions de pixels, une caméra thermographique, ou plus généralement par tout type de système d'imagerie.

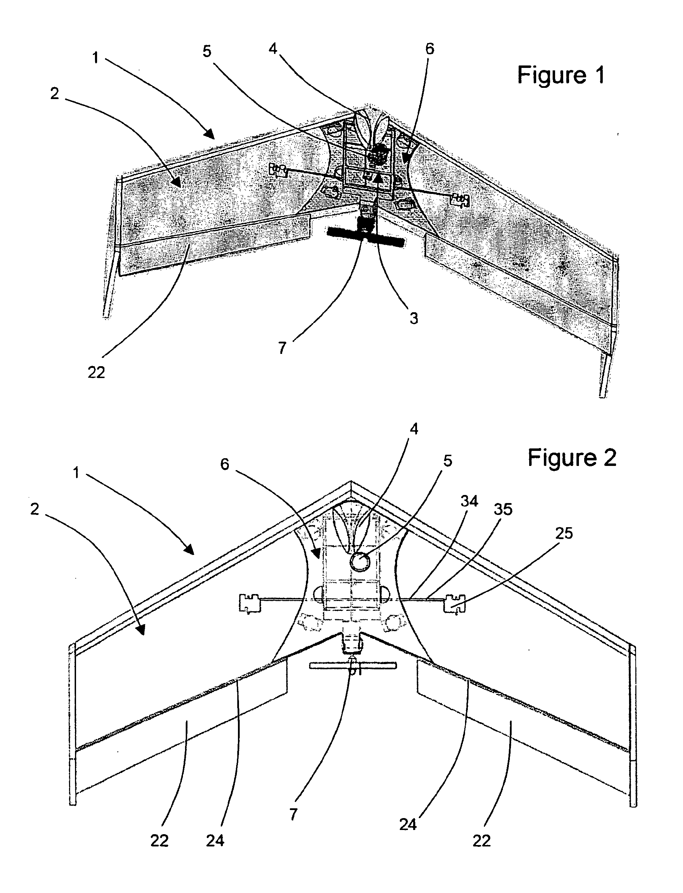

Les figures 1 et 2 représentent ce drone modulaire 1, constitué des sous-ensembles suivants :
- une structure volante 2 permettant la sustentation du drone modulaire 1,
- une charge embarquée 3 contenant tous les circuits électroniques de l'appareil, la motorisation, le boîtier de capteurs de pilotage 4, ainsi que le système d'acquisition d'images 5,
- une platine rigide 6 assurant le maintien de la charge embarquée 3 entre la structure volante 2 et la platine 6, et
- un système propulsif à hélice 7.

La structure volante 2 présente une envergure totale de 92 cm. Elle est constituée en polypropylène expansé. Du fait de sa forme profilée vers l'avant, elle joue le rôle de vecteur pour le drone modulaire 1. Au niveau de sa partie centrale, sa forme est conforme au complémentaire d'une protubérance afin de loger la charge embarquée 3.

Cette structure volante 2 présente un profil aérodynamique apte à la sustentation. En effet, sa géométrie est de type flèche, ce qui offre une portance aérodynamique élevée pour des vitesses de déplacement relativement faibles, de l'ordre de 50 km/h.

Également, cette structure volante 2 est munie d'un dispositif de gouvernes articulées de commande 22 et d'un dispositif de servo-commande, afin de piloter le drone modulaire 1 dans l'espace aérien.

Les gouvernes articulées de commande 22 sont intégrées à la structure volante 2, grâce à l'utilisation de charnières 24, ces charnières 24 étant directement intégrées à la structure volante 2 par compression de la matière polypropylène expansé dans le moule de fabrication. Ce procédé assure une résistance accrue pour une masse très faible.

Le dispositif de servo-commande permet d'actionner les gouvernes articulées 22, par l'intermédiaire de servo-moteurs mécaniques et électriques 25 intégrées à la structure volante 2, ces servo-moteurs 25 étant reliés aux gouvernes articulées 22 à l'aide de tiges en aciers et de guignols en carbone (non visibles). Lesdits servo-moteurs 25 sont de plus reliés au boîtier de commande de pilotage (non visible) du drone, ce boîtier de commande de pilotage transmettant les instructions de pilotage au sol par l'utilisateur jusqu'aux servo-moteurs 25. À ce titre, la structure volante 2 présente des renfoncements longilignes 34, comme illustré par la figure 2. Ces logements permettent le passage des connexions électriques (non visibles) entre le boîtier de commande de pilotage et les servo-moteurs 25, ces renfoncements longilignes 34 étant associés à un longeron en carbone 35. Les servo-moteurs étant intégrés à la structure volante 2, ils font partie des éléments consommables du drone modulaire 1, et sont remplacés en même temps que la structure volante 2 lorsque celle-ci a subi un choc irréversible lors d'une chute du drone modulaire 1.

Le longeron en carbone 35, allant d'un servomoteur à l'autre, supporte les charges aérodynamiques qui s'appliquent sur la voilure. Il recouvre le renfoncement longiligne 34, ainsi que les câbles électriques situés à l'intérieur du renfoncement 34.

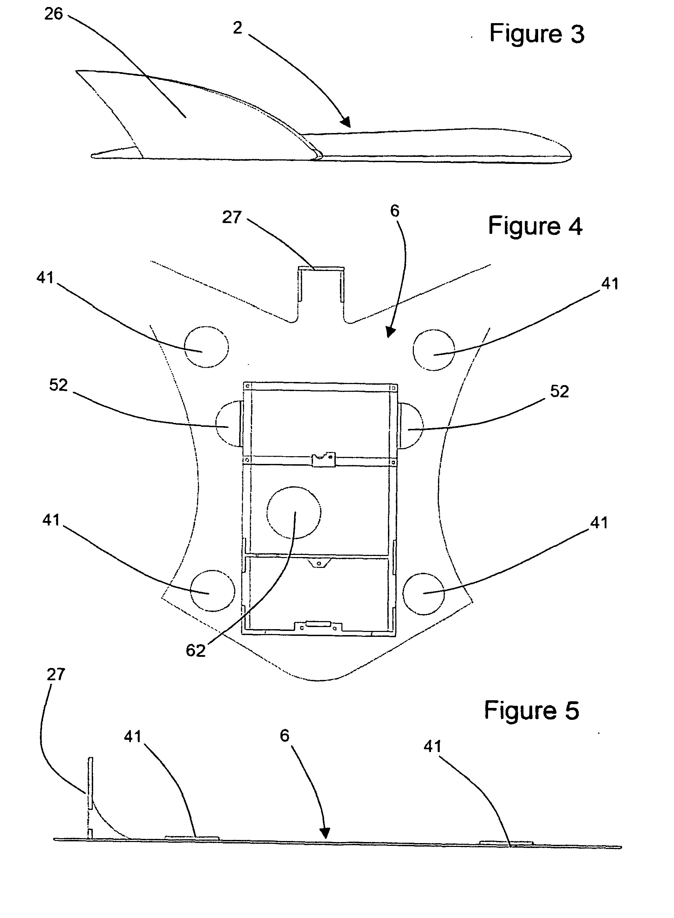

La structure volante 2 dispose à chacune de ses extrémités d'une ailette verticale marginale 26, comme illustré par la figure 3.

Le système propulsif à hélice 7 est un système classique de propulsion dans le domaine aéronautique. Il est fixé à la platine 6 par des connexions de type mécanique.

Les figures 4 et 5 représentent la platine rigide 6, qui permet l'assemblage de la charge embarquée 3 à la structure volante 2. Elle est constituée d'une plaque de carbone rigide. Elle est de forme plane sur toute sa longueur, jusqu'à son extrémité arrière qui comporte le support 27 pour le système propulsif à hélice 7.

La charge embarquée 3 est constituée en outre du boîtier de capteurs de pilotage 4 du drone par réception des instructions de pilotage par l'utilisateur au sol, ainsi que du système d'acquisition d'images 5 par émission des données de ces images vers l'utilisateur au sol.

Elle contient également les alimentations (non visibles) nécessaires au fonctionnement du boîtier de capteurs de pilotage 4, du système d'acquisition d'images 5, du dispositif de servo-commande, et enfin la motorisation du système propulsif à hélice 7.

Elle contient enfin les connectiques électriques (non visibles), ainsi qu'un dispositif d'émission/réception (non visible) apte à communiquer avec un dispositif d'émission/réception analogue prévu sur un système de pilotage au sol.

Le drone modulaire 1 présente une pluralité de connectiques électriques (non visibles) permettant les connexions électriques entre les différents éléments que sont le boîtier de commande, le système d'acquisition d'images 5, le dispositif de servo-commande et le système propulsif à hélice 7.

Le boîtier de capteurs de pilotage 4 contient un ensemble de capteurs permettant de fournir des informations nécessaires au pilotage du drone dans l'espace aérien.

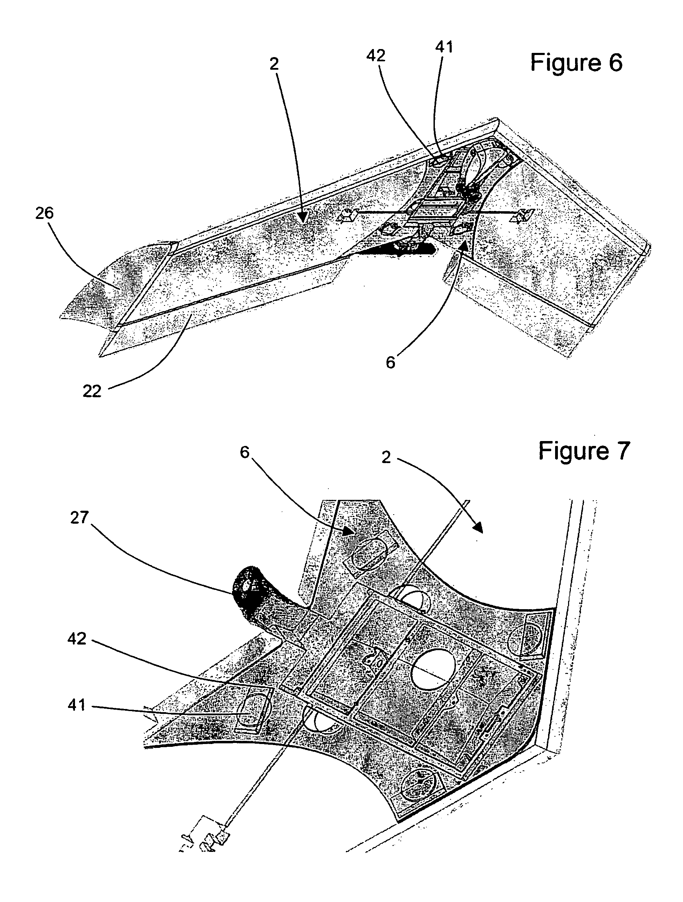

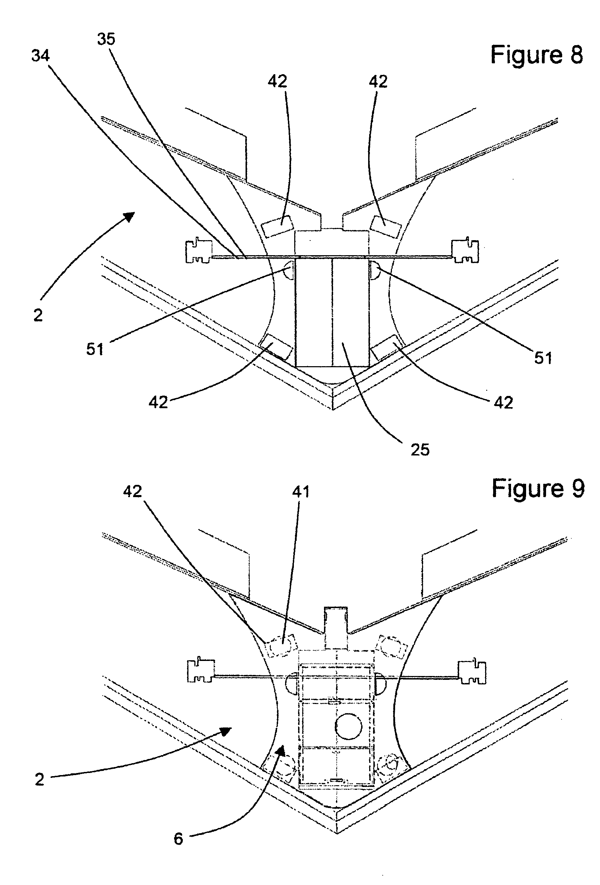

Les figures 6 à 9 représentent la connexion entre la structure volante 2 et la platine 6. La connexion est réalisée au moyen de huit aimants permanents puissants 41,42 dont quatre sont encastrés et collés dans la structure volante et les quatre autres sont collés dans la platine. Les quatre aimants 41 de la platine 6 sont de forme circulaire (figure 4). Les quatre aimants 42 de la structure volante 2 sont de forme rectangulaire (figure 8) et de dimension supérieure à la dimension des aimants 41 de la platine 6, de façon à assurer un recouvrement complet des aimants 41 de la platine 6 lorsque les aimants 42 de la structure volante 2 sont mal centrés par rapport à ceux de la platine, à une certaine marge près correspondant à la différence de dimension entre les aimants de la structure volante et ceux de la platine (figure 9). Ceci permet à un utilisateur du drone de bénéficier d'une certaine marge de manoeuvre lors de l'assemblage de la structure volante 2 avec la platine 6.

Les aimants permanents sont de type Neodymium NdFeB, de puissance en surface 12900 Gauss. Ce type d'aimants permanents à terre rare présente un rapport puissance magnétique sur masse particulièrement élevé, ce qui offre au présent exemple de réalisation une puissance magnétique élevée sans alourdir significativement l'appareil. De plus, deux aimants permanents ainsi constitués sont susceptibles de se désolidariser l'un de l'autre lorsque les efforts entre la platine 6 et la structure volante 2 dépassent une valeur seuil d'arrachage.

Le drone modulaire conforme à la présente invention dispose également de moyens de lancement dans les airs, ces moyens étant nécessaires à l'acquisition d'une vitesse suffisamment élevée pour bénéficier de l'effet de sustentation de la structure volante aérodynamique et ainsi assurer un décollage sans élément motorisé en contact avec le sol susceptible de faire acquérir au drone cette vitesse suffisamment élevée, mais qui alourdirait significativement le drone.

À cet effet, la structure volante 2 présente deux trous en forme de demi-cercle 51, de part et d'autre du logement prévu pour la charge embarquée 3, comme illustré par la figure 8. De même, la platine 6 présente des trous en forme de demi-cercle 52, de part et d'autre du logement prévu pour la charge embarquée 3, comme représenté sur la figure 4, de même dimension que les trous 51 de la structure volante 2, et positionnés de sorte de se superposer avec les trous 52 de la structure volante 2 lorsque la platine 6 et la structure volante 2 sont assemblées (figure 9). Ces renfoncements offrent des espaces de prise en main suffisants pour le lancer au décollage.

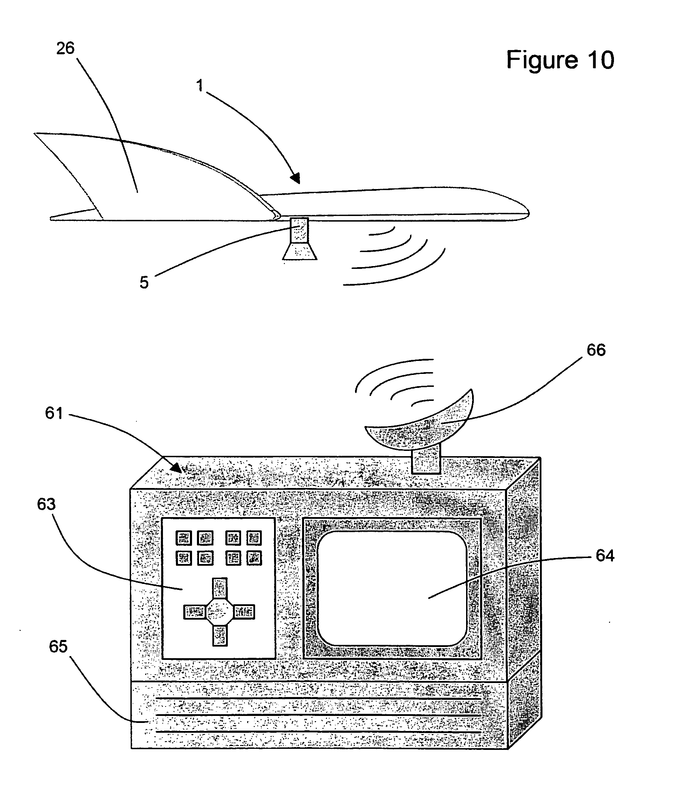

La figure 10 représente l'intégration du drone modulaire 1 à un système aéroporté d'acquisition d'images comportant également un système de pilotage au sol 61 apte à communiquer avec le drone modulaire 1. L'ensemble formé par ce drone modulaire 1 et le système de pilotage au sol 61 permet à un utilisateur de contrôler et de commander les déplacements du drone en fonction de l'image que celui-ci souhaite acquérir.

Le système d'acquisition d'images 5 est logé dans la charge embarquée 3. Il est orienté vers le sol. À cet effet, la structure volante 2 présente, au niveau de la zone prévue pour le logement de la charge embarquée 3, un trou circulaire 62, comme illustré par la figure 4, permettant le passage du système d'acquisition d'images 5 afin de permettre à ce dernier de viser le sol lorsque le drone possède une direction de vol longitudinale.

Le système de pilotage au sol 61 permet à un utilisateur du drone de le commander directement depuis le sol. Il est constitué d'un ensemble unique comprenant une partie dédiée au pilotage au sol et une partie dédiée à la visualisation des images en temps réel au sol.

La partie dédiée au pilotage au sol comprend une table de commande 63 sur laquelle peuvent être actionnées des commandes de vol de type « haut - bas - gauche - droite » et « puissance moteur », ainsi que la commande des paramètres de prise de vue et le déclenchement de la prise de vue elle-même. Ces commandes de vol, sélectionnées par l'utilisateur au sol, sont transmises jusqu'au boîtier de commande de pilotage (non visible) via le dispositif d'émission/réception 66 du drone modulaire 1. La structure volante 2 étant solidaire du système d'acquisition d'images 5 via des connexions rigides de type magnétique, les commandes de vol orientent à la fois la structure volante 2 et le système d'acquisition d'images 5.

La partie dédiée à la visualisation des images en temps réel au sol permet à l'utilisateur d'observer en temps réel l'image acquise par le système aéroporté d'acquisition d'images afin de piloter le système en fonction de l'image qu'il souhaite obtenir. Elle est constituée à cet effet d'un moniteur de visualisation 64 de l'image en temps réel, le moniteur étant relié à un support électronique et informatique 65 contenant les programmes de pilotage et un dispositif d'émission/réception 66 apte à communiquer avec le système d'acquisition d'images 5 du drone modulaire 1.

Dans un autre mode de réalisation, le drone se différencie du drone précédemment décrit en ce que les huit aimants permanents puissants sont remplacés par des matériaux auto-agrippants ou des bandes auto-agrippantes, disposés aux mêmes emplacements sur la structure volante et sur la platine.

Dans un autre mode de réalisation, le drone se différencie du drone précédemment décrit en ce que les huit aimants permanents puissants sont remplacés par des électro-aimants, ou plus généralement par des liaisons électromagnétiques de tout type.

Dans un mode de réalisation particulier, le système de pilotage au sol 61 comprend un système de communication apte à transmettre des instructions à la charge embarquée 3, et une tablette graphique affichant en temps réel l'image transmise par le système d'imagerie dudit drone, cette tablette graphique pouvant être commandée par un stylet grâce auquel l'utilisateur du système de pilotage au sol 61 peut définir une zone sur la tablette graphique afin de définir un nouveau cadre de prise de vue. Le système de pilotage au sol 61 dispose à cet effet d'un dispositif de calcul intégrant la position du système aéroporté, le cadre de prise de vue tel qu'affiché sur la tablette graphique et le nouveau cadre de prise de vue tel que sélectionné par l'utilisateur. Le dispositif de calcul détermine à partir de ces données d'entrée la nouvelle position jusqu'où piloter le drone afin que le nouveau cadre de prise de vue soit tel que celui défini par l'utilisateur. Le dispositif de calcul intègre par ailleurs un algorithme d'asservissement en déplacements, afin de recalculer en temps réel, après avoir reçu l'instruction de déplacement jusqu'à la nouvelle position, la trajectoire du drone lui permettant d'atteindre la nouvelle position telle qu'instruite par le système de pilotage au sol 61. Enfin, le système de pilotage au sol 61 est apte à communiquer les instructions de vol à la charge embarquée 3 du drone modulaire 1.

Un drone modulaire conforme à la présente invention peut être utilisé dans différents domaines d'applications, comme la photographie professionnelle ou le journalisme télévisuel. Plus généralement il convient de l'utiliser dans tout domaine d'application impliquant un système aéroporté d'acquisition d'images nécessitant l'accès dudit système d'acquisition d'images à une zone de l'espace aérien où tout autre système aéroporté de plus grande envergure, tel un hélicoptère, ne peut accéder. Enfin, de manière non limitative, ce drone peut remplacer de manière avantageuse tout autre système aéroporté d'acquisition d'images en ce que son poids et son envergure moindres lui permettent d'accéder au moins aux mêmes zones de l'espace aérien, tout en étant susceptible de fournir une qualité d'image au moins égale.

## Revendications

1. Drone modulaire (1) constitué par une structure volante (2) et des moyens d'acquisition d'images, lesdits moyens d'acquisition d'images ainsi que la motorisation sont supportés par une platine rigide (6) reliée à la structure volante (2) par des liaisons détachables lorsque les efforts entre ladite platine (6) et ladite structure volante (2) dépassent, une valeur seuil d'arrachage, **caractérisé en ce que** lesdites liaisons sont constituées par l'un parmi des liaisons électromagnétiques (41,42) et des matériaux et bandes auto-agrippants.

2. Drone modulaire (1) selon la revendication 1, **caractérisé en ce que** lesdites liaisons détachables sont constituées par des liaisons électromagnétiques (41,42).

3. Drone modulaire (1) selon la revendication 2, **caractérisé en ce que** lesdites liaisons détachables sont constituées par des aimants permanents (41, 42).

4. Drone modulaire (1) selon la revendication précédente, **caractérisé en ce que** lesdites liaisons détachables sont constituées par une pluralité d'aimants permanents à terres rares (41) disposés dans une zone périphérique de ladite platine (6), la structure volante (2) comportant des aimants permanents (42) disposés pour coopérer magnétiquement avec les aimants permanents (41) de la platine (6) lorsque les deux parties sont assemblées.

5. Drone modulaire (1) selon la revendication 2, **caractérisé en ce que** lesdites liaisons détachables sont constituées par des électro-aimants.

6. Drone modulaire (1) selon la revendication précédente, **caractérisé en ce que** lesdites liaisons détachables sont constituées par une pluralité d'électro-aimants disposés dans une zone périphérique de ladite platine (6), la structure volante (2) comportant des électro-aimants disposés pour coopérer magnétiquement avec les électro-aimants de la platine (6) lorsque les deux parties sont assemblées.

7. Drone modulaire (1) selon la revendication 1, **caractérisé en ce que** lesdites liaisons détachables sont constituées par des matériaux auto-agrippants.

8. Drone modulaire (1) selon la revendication 1, **caractérisé en ce que** lesdites liaisons détachables sont constituées par des bandes auto-agrippantes.

9. Drone modulaire (1) selon l'une quelconque des revendications précédentes, **caractérisé en ce qu'**une partie au moins des moyens de liaison sont encastrés dans la structure volante (2) ou la platine (6).

10. Drone modulaire (1) selon l'une quelconque des revendications précédentes, **caractérisé en ce que** la structure volante (2) présente à sa partie inférieure une zone plane correspondant à l'implantation de ladite platine (6), cette zone plane présentant une cavité d'une forme complémentaire à une protubérance prévue sur ladite platine (6) pour le logement de la charge embarquée (3).

11. Drone modulaire (1) selon l'une quelconque des revendications précédentes, **caractérisé en ce que** la platine (6) présente une pluralité de contacts électriques aptes à coopérer avec des contacts complémentaires prévus sur la structure volante (2), pour la transmission des signaux électriques de commande des servo-moteurs (25) solidaires de la structure volante (2).

12. Drone modulaire (1) selon l'une quelconque des revendications précédentes, **caractérisé en ce que** la platine (6) est constituée par une plaque de carbone.

13. Drone modulaire (1) selon l'une quelconque des revendications précédentes, **caractérisé en ce que** la structure volante (2) est constituée au moins d'une partie moulée en polypropylène expansé.

14. Drone modulaire (1) selon l'une quelconque des revendications précédentes, **caractérisé en ce que** la structure volante (2) est munie de gouvernes articulées (22) en liaison avec des charnières (24) intégrées à la dite structure volante (2).

15. Drone modulaire (1) selon l'une quelconque des revendications précédentes, **caractérisé en ce que** la structure volante (2) est munie à ses extrémités d'ailettes verticales marginales (26).

16. Système aéroporté d'acquisition d'images constitué d'un drone modulaire (1) conforme à l'une quelconque des revendications précédentes, et d'un système de pilotage au sol (61) apte à communiquer les instructions de vol au boîtier de commande dudit drone modulaire (1).

17. Système aéroporté d'acquisition d'images selon la revendication 16, **caractérisé en ce que** ledit boîtier de commande comporte des moyens d'asservissement des déplacements du drone en fonction de l'image cible à acquérir, ladite image cible étant déterminée par un utilisateur dudit système de pilotage au sol (61).

## Claims

1. Modular drone (1) consisting of a flying structure (2) and image acquisition means, said image acquisition means as well as the motorization are supported by a rigid platen (6) connected to the flying structure (2) by links that are detachable when the loadings between said platen (6) and said flying structure (2) exceed a wrenching threshold value, **characterised in that** the links are constituted by one from amongst electromagnetic links (41, 42) and the self-adhering tapes and materials.

2. Modular drone (1) according to claim 1, **characterised in that** the said detachable links consist of electromagnetic links (41, 42).

3. Modular drone (1) according to claim 2 **characterised in that** the said detachable links consist of permanent magnets (41, 42).

4. Modular drone (1) according to the previous claim, **characterised in that** the said detachable links consist of a plurality of permanent rare earth magnets (41) placed in a peripheral zone of the said platen (6), the flying structure (2) comprising permanent magnets (42) placed to cooperate magnetically with the permanent magnets (41) of the platen (6) when the two parts are assembled.

5. Modular drone (1) according to claim 2 **characterised in that** the said detachable links consist of electro-magnets

6. Modular drone (1) according to the previous claim, **characterised in that** the said detachable links consist of a plurality of electro-magnets placed in a peripheral zone of the said platen (6), the flying structure (2) comprising electro-magnets placed to cooperate magnetically with the electro-magnets (41) of the platen (6) when the two parts are assembled.

7. Modular drone (1) according to claim 1, **characterised in that** the said detachable links consist of self-adhering materials.

8. Modular drone (1) according to claim 1, **characterised in that** the said detachable links consist of self-adhering tapes.

9. Modular drone (1) according to any of the previous claims, **characterised in that** at least one part of the link means are embedded in the flying structure (2) or the platen (6).

10. Modular drone (1) according to any of the previous claims, **characterised in that** the flying structure (2) has in its lower part a flat zone corresponding to the siting of the said platen (6), this flat zone presenting a cavity which is complementary in form to the protuberance provided on the said platen (6) to house the on-board load.

11. Modular drone (1) according to any of the previous claims, **characterised in that** the platen (6) presents a plurality of electric contacts able to cooperate with the complementary contacts provided on the flying structure (2), for the transmission of electric command signals of the servo-motors which are integral with the flying structure (2).

12. Modular drone (1) according to any of the previous claims, **characterised in that** the platen (6) consists of a carbon plate.

13. Modular drone (1) according to any of the previous claims, **characterised in that** the flying structure (2) consists at least of a moulded part in expanded polypropylene.

14. Modular drone (1) according to any of the previous claims, **characterised in that** the flying structure (2) is equipped with articulated flaps (22) linked to hinges integrated into the said flying structure (2).

15. Modular drone (1) according to any of the previous claims, **characterised in that** the flying structure (2) is equipped at its extremities with marginal vertical strips (26).

16. Airborne image acquisition system consisting of a modular drone (2) in accordance with any of the previous claims, and a flight control system on the ground (61) able to communicate the flight instructions to the control unit of the said modular drone (1).

17. Airborne image acquisition system according to claim 16, **characterised in that** the said control unit comprises means to control the displacement of the drone as a function of the target image to be acquired, the said target image being determined by a user of the said flight control system on the ground (61).

## Patentansprüche

1. Modulare Drohne (1), gebildet durch eine fliegende Struktur (2) und Bilderfassungsmitteln, wobei die Bilderfassungsmittel sowie die Motorisierung durch eine steife Platte (6) getragen werden, die mit der fliegenden Struktur (2) durch Verbindungen verbunden ist, die lösbar sind, wenn die Spannungen zwischen der Platte (6) und der fliegenden Struktur (2) beim Ziehen einen Schwellenwert übersteigen, **dadurch gekennzeichnet, dass** die Verbindungen gebildet sind aus einem von elektromagnetischen Verbindungen (41, 42) und selbsthaftenden Materialien und Bändern.

2. Modulare Drohne (1) nach Anspruch 1, **dadurch gekennzeichnet, dass** die lösbaren Verbindungen durch elektromagnetische Verbindungen (41, 42) gebildet werden.

3. Modulare Drohne (1) nach Anspruch 2, **dadurch gekennzeichnet, dass** die lösbaren Verbindungen durch Permanentmagnete (41, 42) gebildet werden.

4. Modulare Drohne (1) nach dem vorhergehenden Anspruch, **dadurch gekennzeichnet, dass** die lösbaren Verbindungen durch eine Mehrzahl von Permanentmagnete aus Seltenen Erden (41) gebildet werden, die in einer Umfangszone der Platte (6) angeordnet sind, wobei die fliegende Struktur (2) Permanentmagnete (42) auf weist, die so angeordnet sind, dass diese magnetisch mit dem Permanentmagneten (41) der Platte (6) zusammenwirken, wenn die zwei Partien zusammengebaut sind.

5. Modulare Drohne (1) nach Anspruch 2, **dadurch gekennzeichnet, dass** die lösbaren Verbindungen durch Elektromagnete gebildet werden.

6. Modulare Drohne (1) nach dem vorhergehenden Anspruch, **dadurch gekennzeichnet, dass** die lösbaren Verbindungen durch eine Mehrzahl von Elektromagneten gebildet werden, die in einer Umfangszone der Platte (6) angeordnet sind, wobei die fliegende Struktur (2) Elektromagnete umfasst, die so angeordnet sind, dass diese magnetisch mit dem Elektromagneten der Platte (6) zusammenwirken, wenn die zwei Partien zusammengebaut sind.

7. Modulare Drohne (1) nach Anspruch 1, **dadurch gekennzeichnet, dass** die lösbaren Verbindungen durch selbsthaftende Materialien gebildet werden.

8. Modulare Drohne (1) nach Anspruch 1, **dadurch gekennzeichnet, dass** die lösbaren Verbindungen durch selbsthaftende Bänder gebildet werden.

9. Modulare Drohne (1) nach einem der vorhergehenden Ansprüche, **dadurch gekennzeichnet, dass** wenigstens der Verbindungsmittel in die fliegende Struktur (2) oder die Platte (6) eingebaut ist.

10. Modulare Drohne (1) nach einem der vorhergehenden Ansprüche, **dadurch gekennzeichnet, dass** die fliegende Struktur (2) in ihrem unteren Bereich eine ebene Zone aufweist, die mit der Implantation der Platte (6) korrespondiert, wobei diese ebene Zone einen Raum aufweist, der eine komplementäre Form zu einer Protuberanz aufweist, die auf der Platte (6) vorgesehen ist, zur Aufnahme der geladenen Ladung (3).

11. Modulare Drohne (1) nach einem der vorhergehenden Ansprüche, **dadurch gekennzeichnet, dass** die Platte (6) eine Mehrzahl von elektrischen Kontakten auf weist, die so ausgelegt sind, dass diese mit komplementären Kontakten zusammenwirken, die auf der fliegenden Struktur (2) vorgesehen sind, um elektrische Steuersignale von Servomotoren (25), die mit der fliegenden Struktur (2) fest verbunden sind, zu übertragen.

12. Modulare Drohne (1) nach einem der vorhergehenden Ansprüche, **dadurch gekennzeichnet, dass** die Platte (6) durch eine Kohlenstoffplatte gebildet wird.

13. Modulare Drohne (1) nach einem der vorhergehenden Ansprüche, **dadurch gekennzeichnet, dass** die fliegende Struktur (2) aus wenigstens einem aus expandiertem Polypropylen geformten Abschnitt gebildet wird.

14. Modulare Drohne (1) nach einem der vorhergehenden Ansprüche, **dadurch gekennzeichnet, dass** die fliegende Struktur (2) mit angelenkten Steuerflächen (22) in Verbindung mit Scharnieren (24) versehen ist, die in die fliegende Struktur (2) integriert sind.

15. Modulare Drohne (1) nach einem der vorhergehenden Ansprüche, **dadurch gekennzeichnet, dass** die fliegende Struktur (2) an ihren Enden mit seitlichen vertikalen Flügeln (26) versehen ist.

16. Lufttransportsystem für eine Bilderfassung, gebildet aus einer modularen Drohne (1) nach einem der vorhergehenden Ansprüche, und einem Boden-Steuerungssystem (61), das so ausgebildet ist, dass dieses die Fluganweisungen an das Steuergehäuse der modularen Drohne (1) kommuniziert.

17. Lufttransportsystem zur Bilderfassung nach Anspruch 16, **dadurch gekennzeichnet, dass** das Steuergehäuse Mittel zur Regelung von Verlagerungen der Drohne in Abhängigkeit von einem zu erfassenden Zielbild umfasst, wobei das Zielbild durch einen Benutzer des Boden-Steuerungssystems (61) bestimmt wird.
